(19) Europäisches Patentamt
European Patent Office
Office européen des brevets

(11) Veröffentlichungsnummer: **0 161 413**
**B1**

(12) **EUROPÄISCHE PATENTSCHRIFT**

(45) Veröffentlichungstag der Patentschrift: **18.01.89**

(51) Int. Cl.⁴: **C 08 G 63/60**, C 08 G 63/68, C 08 G 63/20

(21) Anmeldenummer: **85102918.1**

(22) Anmeldetag: **14.03.85**

(54) **Vollaromatische Polyester, Verfahren zu ihrer Herstellung und entsprechende Formkörper.**

(30) Priorität: **24.03.84 DE 3410927**

(43) Veröffentlichungstag der Anmeldung: **21.11.85 Patentblatt 85/47**

(45) Bekanntmachung des Hinweises auf die Patenterteilung: **18.01.89 Patentblatt 89/3**

(84) Benannte Vertragsstaaten: **BE DE FR GB IT NL**

(56) Entgegenhaltungen:
**FR-A- 2 189 447**
**GB-A- 988 828**
**US-A- 4 393 190**

**CHEMICAL ABSTRACTS, Band 91, Nr. 20, November 1979, Seite 30, Nr. 158520h, Columbus, Ohio, US; & JP - A - 79 70396 (MITSUBISHI ELECTRIC CORP.) 06.06.1979**

(73) Patentinhaber: **HOECHST AKTIENGESELLSCHAFT, Postfach 80 03 20, D-6230 Frankfurt am Main 80 (DE)**

(72) Erfinder: **Blöcker, Erich, Dr., Cherusker Strasse 7, D-6238 Hofheim am Taunus (DE)**

**EP 0 161 413 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Vollständig aromatische Polyester aus aromatischen Dicarbonsäuren und aromatischen Dihydroxyverbindungen und/oder aromatischen Hydroxycarbonsäuren sind seit langem bekannt. Geformte Gebilde aus ihnen haben besondere mechanische Eigenschaften und gute thermische Beständigkeiten, so dass sie für verschiedenste - vor allem technische - Einsatzzwecke in Frage kommen. Im allgemeinen besitzen die vollaromatischen Polyester jedoch eine hohe Schmelzviskosität, so dass die Herstellung und Verarbeitung unter Anwendung der üblichen Schmelz-Verarbeitungsverfahren zu Schwierigkeiten führt. Sie erfordern im allgemeinen höhere Verarbeitungstemperaturen als z.B. Polyethylenterephthalat. Viele vollaromatische Polyester schmelzen bei so hohen Temperaturen, dass hochwertige technische Produkte aus der Schmelze nicht hergestellt werden können.

Die Schmelzviskosität von vollaromatischen Polyestern ist bei gegebener Temperatur im wesentlichen abhängig von der molekularen Struktur der Ausgangskomponenten sowie vom Molekulargewicht, d.h. der durchschnittlichen Kettenlänge der Polymermoleküle.

Die aromatischen Polyester lassen sich einteilen in solche, die eine optisch isotrope Schmelze bilden, und solche, die eine optisch anisotrope Schmelze bilden. Die letzteren werden auch als thermotrope flüssig-kristalline Polyester bezeichnet.

Ein Überblick über flüssig-kristalline Polyester und die Patentveröffentlichungen hierüber bis zum Jahre 1980 ist gegeben von J.-I. Jin et al. im British Polymer Journal, Vol. 12, No. 4, Seiten 132-146 (1980). Neuere Patentveröffentlichungen über flüssig-kristalline vollaromatische Polyester sind z.B. die EP A 71 447, 72 540, 76 133, 84 256 und 88 742.

Die Schmelz-Polykondensation von vollaromatischen Polyestern findet zumindest während der letzten Phase im Vakuum statt, wobei die Viskosität der Schmelze gegen Ende der Polykondensation stark zunimmt. Je nach Zusammensetzung der vollaromatischen Polyester und insbesondere bei der Synthese von flüssig-kristallinen Polyestern kann die Schmelzviskosität des Produktes schnell so hoch werden, dass ein Rühren in einer üblichen Rührapparatur nicht mehr möglich ist (vgl. EP A 70 539: Vergleichsbeispiele 2, 3 und 4, Seite 30, Z. 7-10, Seite 35, Z. 10-15, Seite 37, Z. 11-13). Bei der Synthese von vollaromatischen Polyestern aus aromatischen Hydroxycarbonsäuren bzw. ihren esterbildenden Derivaten tritt der rasche Anstieg der Schmelzviskosität besonders leicht auf. In derartigen Ausgangsverbindungen sind die beiden esterbildenden Gruppen immer in äquivalentem Verhältnis vorhanden, so dass die Polykondensation unbehindert bis zu den höchsten Molekulargewichten verlaufen kann. Bei der Synthese von Polyestern aus Dicarbonsäuren und Dihydroxyverbindungen kann demgegenüber durch einen leichten Überschuss der einen Komponente die Äquivalenz gestört und dadurch eine Molekulargewichtsregelung erreicht werden.

Die Möglichkeiten der Polykondensation von aromatischen Hydroxysäuren sind beschrieben von S. G. Cottis und J. Economy in «Condensation Monomers», herausgegeben von J. K. Stille und T. W. Campbell, New York 1973, Seite 358-360. Daraus geht hervor, dass sowohl die aromatischen Hydroxysäuren selbst leicht decarboxylieren (Seite 358, Kapitel C, Zeilen 4-5 und Seite 359, Absatz 4, Zeilen 9-10) als auch das Poly-p-oxybenzoat, das aus der p-Acetoxybenzoesäure synthetisiert wurde, da es sich schon bei 350°C zersetzt (Seite 360, Absatz 1, Zeilen 5-7). Wird dagegen die Carboxylgruppe der Ausgangsverbindungen durch Blockierung in Form eines reaktiven Esters geschützt, werden thermisch stabile Polyoxybenzoyl-Polymere erhalten (Seite 358, letzter Absatz bis Seite 359, 1. Absatz und Seite 360, 2. Absatz).

Die Verminderung der hohen Schmelzviskosität von vollaromatischen Polyestern ist Gegenstand der EP-A 70 539. Es werden hierzu den Polyestern - bevorzugt schon bei der Herstellung - niedermolekulare, hochsiedende Verbindungen zugesetzt, die nicht mit dem vollaromatischen Polyester reagieren. Die so entstandene Mischung ist weniger viskos als die Polymerschmelze. Nach der Verarbeitung dieser Mischungen zu geformten Gebilden muss dann die zugesetzte Verbindung mit organischen Lösungsmitteln möglichst vollständig extrahiert werden. Das ist jedoch nur möglich, wenn dünne film- oder fadenförmige Gebilde aus den Mischungen hergestellt werden. In der Praxis ist dies mit einem hohen Aufwand verbunden und deshalb kaum praktikabel.

In der US A 4 393 190 werden Polycarbonate und Polyestercarbonate beschrieben, die als Endgruppen das N-(p-Hydroxyphenyl)-phthalimid enthalten. Diese Polycarbonate und Polyestercarbonate wurden durch eine Grenzflächenpolykondensation in einem Zweiphasensystem (Methylenchlorid/Wasser) aus den phenolischen Komponenten durch Einleiten von Phosgen in Anwesenheit einer organischen Base hergestellt. Die zugesetzte monofunktionelle Imidverbindung dient in erster Linie zur Verbesserung der Beständigkeit dieser Polymeren gegenüber Chemikalien wie Tetrachlorkohlenstoff, Benzin, Phosphatestern und bewirkt ausserdem eine Molekulargewichtsregulierung.

Über die Verwendbarkeit dieses Imids bei der Schmelz-Polykondensation von vollaromatischen Polyestern ist nichts gesagt, ebensowenig über die hierbei erzielbaren besonderen Vorteile.

Die Aufgabe vorliegender Erfindung bestand daher darin, vollaromatische Polyester und ein Verfahren zu deren Herstellung bereitzustellen, wobei diese Polyester - ohne die Notwendigkeit einer nachträglichen Extraktion einer viskositätserniedrigenden Substanz - eine so niedrige Schmelzviskosität besitzen sollen, dass die Herstellung und Verarbeitung mittels der üblichen Schmelz-Verarbeitungsverfahren ohne Schwierigkeiten durchführbar ist. Dies ist von besonderem Interesse bei der Synthese von flüssig-kristallinen Polyestern, die eine optisch-anisotrophe Schmelze bilden und ein besonderes Viskositätsverhalten zeigen. Weiterhin sollen die vollaromatischen Polyester bzw. die daraus hergestellten Formkörper aufgabengemäss so beschaffen sein, dass eine weitere Molekulargewichtserhöhung durch eine nachträgliche Feststoffkondensation möglich ist. Vorzugsweise sollen diese Polyester ausserdem bei der Herstellung und der Verarbeitung möglichst wenig Decarboxylierungsreaktionen unterliegen, um so die Gasblasenbildung bei höherer Temperaturen gering zu halten.

Die Lösung dieser Aufgabe wird erfindungsgemäss überraschenderweise durch vollaromatische Polyester erreicht, deren Molekülketten an einem Ende überwiegend bestimmte aromatische Imide als Endgruppen enthalten. Zur Herstellung derartiger vollaromatischer Polyester erfolgt die Polykondensation der Kondensationspartner in Gegenwart bestimmter schwerflüchtiger, monofunktioneller, aromatischer Imide als Molekulargewichtsregler.

Die vorliegende Erfindung betrifft daher vollaromatische Polyester, bestehend im wesentlichen aus den Einheiten

$$(-O-Z-\overset{\overset{O}{\|}}{C}-), \text{ und/oder } (-\overset{\overset{O}{\|}}{C}-Z-\overset{\overset{O}{\|}}{C}-) \text{ und } (-O-Z-O-),$$

worin Z ein aromatisches Ringsystem bedeutet, wobei mindestens ein Ende der Molekülketten aus Resten eines Molekulargewichtsreglers gebildet wird, dadurch gekennzeichnet, dass die Reste des Molekulargewichtsreglers folgende Struktur aufweisen:

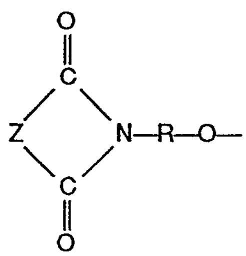
,
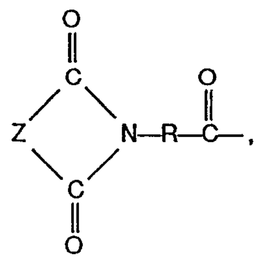
,

(I)

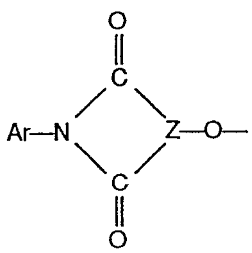
,
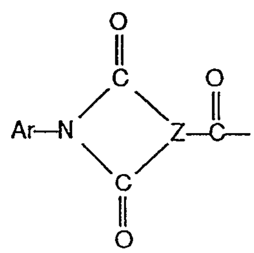
,

worin Z die obige Bedeutung hat, R eine divalente, aromatische, aliphatische oder cycloaliphatische Gruppe bedeutet, Ar für eine aromatische Gruppe steht und der Imidring fünf- oder sechsgliedrig ist.

Weiterhin hat die Erfindung ein Verfahren zur Herstellung der obigen vollaromatischen Polyester zum Gegenstand, durch Schmelzkondensation von geeigneten Kondensationspartnern in Gegenwart eines Molekulargewichtsreglers, dadurch gekennzeichnet, dass als Molekulargewichtsregler eine Verbindung folgender Struktur oder entsprechende Gemische eingesetzt werden:

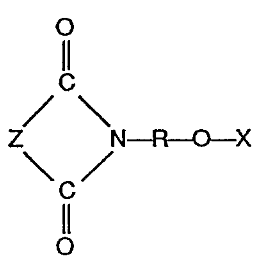
,
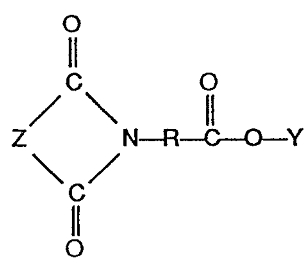
,

(II)

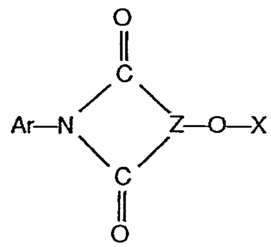, 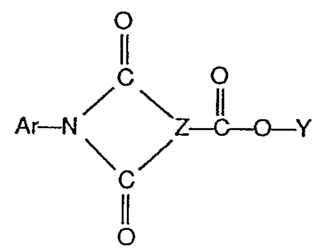,

worin Z, R und Ar die obige Bedeutung haben, der Imidring fünf- oder sechsgliedrig ist, X Wasserstoff oder ein Acylrest mit 2 bis 6 C-Atomen und Y Wasserstoff oder ein unter den Bedingungen der Polykondensation leicht abspaltender Kohlenwasserstoffrest, vorzugsweise ein Phenylrest ist.

Schliesslich bezieht sich die Erfindung auch noch auf Formkörper, hergestellt aus obigen vollaromatischen Polyestern.

Die vollaromatischen Polyester gemäss der Erfindung enthalten im allgemeinen bis zu 5 Mol-%, bevorzugt 0,2 bis 2 Mol-% und insbesondere 0,5 bis 1,5 Mol-%, bezogen auf die Gesamtmenge der den Polyester bildenden aromatischen Einheiten, an Endgruppen obiger Struktur (I).

Diese Endgruppen können verschieden sein, d.h. bei der Herstellung des erfindungsgemässen Polyesters können entweder Gemische aus XO- oder YOCO-gruppenhaltigen Molekulargewichtsreglern gemäss (II) zum Einsatz kommen. Bevorzugt enthält der Polyester erfindungsgemäss jedoch nur jeweils einen Typ dieser Endgruppen. Diese Endgruppen treten erfindungsgemäss partiell oder überwiegend an Stelle der Hydroxyl-/Acyl-Endgruppen oder an Stelle der Carboxyl-Endgruppen (also jeweils an eine der beiden Endgruppen), die bei Abwesenheit des erfindungsgemäss eingesetzten Molekulargewichtsreglers vorhanden wären.

Die oben benutzten Symbole haben bevorzugt die folgende Bedeutung:

Z, Ar = unsubstituierter oder mit inerten Substituenten wie $C_{1-4}$-Alkyl, $C_{1-4}$Alkoxy oder mit Halogen, vorzugsweise Chlor, substituierter Benzol- oder Naphthalin-Ring;
R = unsubstituierter oder wie vorstehend substituierter divalenter Benzol- oder Naphthalin-Ring; divalenter aliphatischer Rest mit 1 bis 6 C-Atomen; divalenter cycloaliphatischer Rest mit 6 bis 16 C-Atomen, vorzugsweise 6 bis 10 C-Atomen.

Die Herstellung der erfindungsgemässen vollaromatischen Polyester erfolgt in bekannter Weise durch Polykondensation geeigneter, mindestens bifunktioneller Monomerer in der Schmelze. Als derartige Monomere kommen beispielsweise aromatische Hydroxysäuren (Selbstkondensation) oder Gemische aus aromatischen Dicarbonsäuren und aromatischen Dihydroxyverbindungen oder diese Gemische in Abmischung mit aromatischen Hydroxysäuren in Frage. Die genannten Verbindungen können dabei als solche eingesetzt werden; so kann die Selbstkondensation der aromatischen Hydroxysäuren in Anwesenheit bestimmter Metallverbindungen – wie in der US A 4 393 191 beschrieben – erfolgen. Bevorzugt werden jedoch im allgemeinen die Esterderivate dieser Verbindungen verwendet.

Bevorzugte aromatische Hydroxycarbonsäuren sind beispielsweise: 4-Hydroxybenzoesäure, 4-Hydroxydiphenyl-4'-carbonsäure, 3-Chlor-4-hydroxybenzoesäure, 3-Methoxy-4-hydroxybenzoesäure und 6-Hydroxy-2-naphthoesäure.

Bevorzugte aromatische Dicarbonsäuren sind beispielsweise: Terephthalsäure, Isophthalsäure, Naphthalindicarbonsäure, Diphenyletherdicarbonsäure und Phenylterephthalsäure.

Als bevorzugte Vertreter aromatischer Dihydroxyverbindungen seien hier genannt: Hydrochinon, Resorcin, Chlorhydrochinon, Methylhydrochinon, Phenylhydrochinon, t-Butylhydrochinon, 4,4'-Dihydroxydiphenyl, 4,4'-Dihydroxydiphenylether, Bis-(4-hydroxyphenoxy)-ethan und 2,2-Bis-(4-hydroxyphenyl)-propan.

Die esterbildenden Derivate der aromatischen Hydroxycarbonsäuren sind zum Beispiel die niederen Alkylester, Arylester oder die niederen Fettsäureester der oben aufgeführten Verbindungen. Die niederen Alkylester und Arylester sind dabei Ester, welche die Carboxylgruppe der aromatischen Hydroxycarbonsäuren bildet, während die niederen Fettsäureester Ester sind, welche die Hydroxylgruppe der aromatischen Hydroxycarbonsäuren bildet. Zu den bevorzugten Ester-Derivaten von aromatischen Hydroxycarbonsäuren gehören zum Beispiel 4-Hydroxybenzoesäurephenylester und 4-Acetoxybenzoesäure.

Als esterbildende Derivate der aromatischen Dicarbonsäuren sind zum Beispiel die niederen Alkylester oder die Arylester, wie Dimethyl-, Diethyl-, Diphenyl- und Ditolyl-Ester der oben angeführten Dicarbonsäuren zu nennen. Von diesen Estern werden bevorzugt die Diphenylester, z.B. das Diphenylterephthalat, verwendet.

Als esterbildende Derivate der aromatischen Dihydroxyverbindungen seien hier zum Beispiel die niederen Fettsäureester der oben aufgeführten Verbindungen genannt, wie zum Beispiel die Acetate und Propionate. Von diesen Estern werden bevorzugt die Acetate, z.B. Hydrochinondiacetat, verwendet.

Zur Bildung der erfindungsgemässen vollaromatischen Polyester werden bevorzugt entweder die aromatischen Verbindungen mit veresterter Carboxylgruppe eingesetzt, die dann mit den freien Hydroxylgruppen unter Abspaltung eines Alkohols oder Phenols kondensieren, oder es werden die aromatischen Verbindungen mit veresterten Hydroxygruppen verwendet, die dann

mit den freien Carboxylgruppen unter Abspaltung der niederen Fettsäuren, z.B. Essigsäure oder Propionsäure, kondensieren.

Je nach Kombination der möglichen esterbildenden bifunktionellen Verbindungen erhält man entweder amorphe oder (teil) kristalline Polyester. Werden als Hauptkomponenten solche bifunktionellen Verbindungen eingesetzt, deren funktionelle Gruppen in para-Stellung bzw. bei Naphthalinderivaten in 1,4-, 1,5- oder 2,6-Stellung angeordnet sind, so werden optisch-anisotrope Schmelzen erhalten und damit sogenannte thermotrope flüssig-kristalline Polyester.

Die Polyester-bildenden Monomeren, die im Rahmen dieser Erfindung verwendet werden, können ferner in gewissem Umfang andere esterbildende Verbindungen als die vorgenannten aromatischen Verbindungen einschliessen. Beispielsweise können aliphatische oder alicyclische Dicarbonsäuren, wie z.B. Adipinsäure oder 1,4-Cyclohexandicarbonsäure oder ihre esterbildenden Derivate, bis zu 30-% der aromatischen Dicarbonsäuren ersetzen.

Beispiel für andere Verbindungen, die gleichfalls bis zu 30 Mol-% der aromatischen Dihydroxyverbindungen ersetzen können, sind aliphatische oder alicyclische Diole wie Ethylenglykol, Tetramethylenglykol, Neopentylglykol und 1,4-Cyclohexandimethanol.

Andere Verbindungen, die bis zu 30 Mol-% der aromatischen Hydroxycarbonsäuren ersetzen können, sind Hydroxycarbonsäuren mit einer aliphatischen Hydroxylgruppe und einer aliphatischen oder aromatischen Carboxylgruppe, wie z.B. ε-Hydroxycapronsäure, Hydroxypivalinsäure, 4-[2-Hydroxyethoxy]-benzoesäure und 4-[3-Hydroxypropoxy]-benzoesäure.

Die genannten anderen esterbildenden Verbindungen können einzeln oder als Mischung von zwei oder mehreren eingesetzt werden. Wenn zwei oder mehr von ihnen gleichzeitig verwendet werden, sollte die gesamte Menge dieser nichtaromatischen Verbindungen 30 Mol-% der gesamten Polyester bildenden Einheiten nicht überschreiten.

Wesentlich bei dem erfindungsgemässen Kondensationsverfahren ist die Anwesenheit von Imiden einer oder mehrerer der nachfolgenden Strukturen als Molekulargewichtsregler:

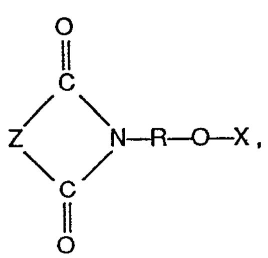
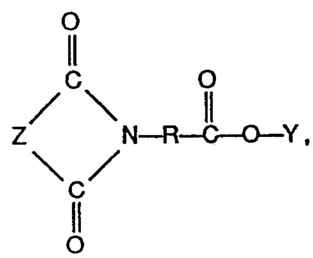

(II)

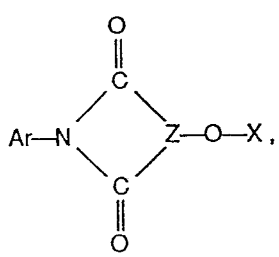
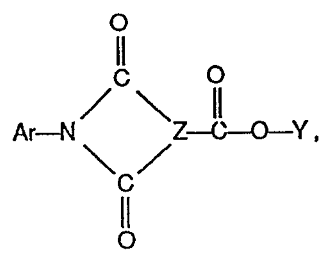

worin Z, R und Ar die weiter oben angegebene Bedeutung haben, X Wasserstoff oder ein Acylrest mit 2 bis 6 C-Atomen und Y Wasserstoff oder ein unter den Bedingungen der Polykondensation leicht abspaltender Kohlenwasserstoffrest, vorzugsweise ein Phenylrest ist. Die Kohlenwasserstoffkomponente des Acylrestes besteht dabei bevorzugt aus dem $C_{1-4}$-Alkylrest. Beispiele für den Acylrest sind der Acetyl-, der Propionyl- und der n-Butyrorest. Der Phenylrest kann unsubstituiert oder substituiert sein. Als Substituenten kommen dabei vorzugsweise inerte Substituenten wie $C_{1-4}$-Alkyl, $C_{1-4}$-Alkoxy oder Halogen, vorzugsweise Chlor, in Frage.

Erfindungsgemässe Molekulargewichtsregler, die eine freie Carboxylgruppe enthalten, sind beispielsweise folgende Verbindungen:

N-[4-Carboxyphenyl]-phthalimid($C_{15}H_9NO_4$), Fp. 297°C

N-Phenyl-phthalimid-4-carbonsäure($C_{15}H_9NO_4$), Fp. 264°C

ε-(1,8-Naphthalimido)-capronsäure($C_{18}H_{17}NO_4$), Fp. 130°C

Erfindungsgemässe Molekulargewichtsregler, die eine Hydroxylgruppe in freier Form oder in Form ihrer Acetylderivate enthalten, sind beispielsweise folgende Verbindungen:

N-[4-Hydroxyphenyl]-phthalimid ($C_{14}H_9NO_3$), Fp. 302°C

N-[4-Acetoxyphenyl]-phthalimid ($C_{16}H_{11}NO_4$), Fp. 244°C

N-[3-Hydroxyphenyl]-phthalimid ($C_{14}H_9NO_3$), Fp. 236°C

N-[3-Acetoxyphenyl]-phthalimid ($C_{16}H_{11}NO_4$), Fp. 138°C

N-[3-Hydroxy-4-methylphenyl]-phthalimid ($C_{15}H_{11}NO_3$), Fp. 226°C
N-[3-Acetoxy-4-methylphenyl-phthalimid ($C_{17}H_{13}NO_4$), Fp. 168°C
5-Hydroxy-1-phthalimido-naphthalin ($C_{18}H_{11}NO_3$)
5-Acetoxy-1-phthalimido-naphthalin ($C_{20}H_{13}NO_4$), Fp. 243°C
N-[4-Hydroxyphenyl]-1,8-naphthalimid ($C_{18}H_{11}NO_3$), Fp. > 300°C
N-[4-Acetoxyphenyl]-1,8-naphthalimid ($C_{20}H_{13}NO_4$), Fp. 238°C
N-[2-Hydroxy-ethyl]-1,8-naphthalimid ($C_{14}H_{11}NO_3$), Fp. 171°C

Diese Imide mit freien Hydroxyl- oder Carboxylgruppen können leicht synthetisiert werden aus den entsprechenden Anhydriden, wie Phthalsäureanhydrid, 1,8-Naphthalinsäureanhydrid, Trimellitsäureanhydrid und aliphatischen oder aromatischen Amino-Verbindungen, die gegebenenfalls eine freie Hydroxyl- oder Carboxylgruppe enthalten. Die Umsetzung kann günstig durch Erhitzen in Dimethylformamid durchgeführt werden, wobei ein Mol Wasser pro gebildetem Imidring abgespalten wird. Die Reaktionspartner lösen sich bei Raumtemperatur oder durch Erwärmen in Dimethylformamid auf. Es wird mehrere Stunden zum Sieden erhitzt, und das gebildete Reaktionswasser über einen Kolonnenkopf abdestilliert. Die Reaktionsprodukte kristallisieren entweder beim Abkühlen der Lösung aus oder werden durch Eingiessen der Lösung in Wasser unter Rühren ausgefällt und isoliert. Die Acetylderivate der aromatischen Hydroxyverbindungen werden durch Erhitzen in Essigsäureanhydrid, gegebenenfalls in Anwesenheit von geringen Mengen konz. Schwefelsäure als Katalysator, hergestellt.

Die erfindungsgemässen Molekulargewichtsregler mit einer Imidring-Struktureinheit im Molekül sind monofunktionelle, esterbildende Komponenten, die unter den Synthesebedingungen für aromatische Polyester nur sehr wenig flüchtig sind. Sie reagieren mit einer der zwei Sorten von Endgruppen der den Polyester bildenden Komponenten und verhindern damit zunächst das Kettenwachstum an diesem Ende der Polymerkette. Bei geeigneter Auswahl des Molekulargewichtsreglers können gleichzeitig chemisch labile Endgruppen – wie z.B. freie Carboxylgruppen – durch Esterbildung blockiert und damit geschützt werden.

Die molare Menge des eingesetzten Molekulargewichtsreglers bestimmt das bei der Schmelz-Polykondensation erreichbare Polymermolekulargewicht bzw. die Kettenlänge. Bis zu 5 Mol-% der erfindungsgemässen Molekulargewichtsregler, bezogen auf die Gesamtmenge an Kondensationspartnern, können den Polyesterausgangskomponenten zugesetzt werden, um noch zu brauchbaren Polymermolekulargewichten bzw. -viskositäten zu kommen. Je mehr Molekulargewichtsregler verwendet wird, desto langsamer verläuft die Polykondensationsreaktion. Bevorzugt werden 0,2 bis 2 Mol-% und insbesondere 0,5 bis 1,5-Mol-% der erfindungsgemässen Molekulargewichtsregler eingesetzt, um für praktische Verwendungszwecke genügend hochmolekulare Polyester zu erhalten. Es ist aber auch möglich, mehr als 5 Mol-% der monofunktionellen Molekulargewichtsregler einzusetzen, wenn man für bestimmte Zwecke niedrigmolekulare Polyester bzw. Oligomere herstellen will, die im geschmolzenen Zustand nicht oder nur sehr langsam zu höhermolekularen Produkten reagieren.

Die Zugabe der erfindungsgemässen Molekulargewichtsregler erfolgt vorzugsweise schon zu Beginn der Polykondensationsreaktion, d.h. sie können gleichzeitig mit den Polyester-Ausgangsstoffen eingesetzt werden. Aber auch eine spätere Zugabe im Laufe der Polykondensationsreaktion ist möglich. Erfolgt die Zugabe des Molekulargewichtsreglers bei der Synthese von flüssigkristallinen Polyestern während der zweiten Hälfte des Polykondensationsprozesses, so wird wegen der schon gebildeten flüssig-kristallinen Bereiche in der Schmelze die Gleichgewichtseinstellung mit dem Molekulargewichtsregler im allgemeinen etwas verzögert, sie findet aber trotzdem statt.

Bei der Zugabe des Molekulargewichtsreglers zu Beginn des Polykondensationsprozesses kann eine Reaktion mit den bifunktionellen Ausgangsstoffen schon frühzeitig stattfinden. Die Polyesterbildung in der Schmelze ist jedoch ein reversibler Vorgang, so dass durch Umesterungsprozesse der monofunktionelle Kettenbegrenzer unter Umständen wieder freigesetzt werden kann. Wenn der Siedepunkt eines Molekulargewichtsreglers nicht hoch genug ist, kann er im Verlaufe der Polykondensation bei den höheren Temperaturen und dem angelegten Vakuum gegen Ende des Herstellungsprozesses zumindest teilweise aus der Reaktionsmischung abdestillieren. Die erfindungsgemässen Molekulargewichtsregler mit einer Imidring-Struktureinheit im Molekül haben sich als besonders vorteilhaft erwiesen, weil sie aufgrund ihrer chemischen Struktur aus mindestens zwei Ringsystemen, und bevorzugt aus drei oder vier Ringsystemen bestehen, sehr hohe Siedepunkte haben und im allgemeinen unter den üblichen Herstellungsbedingungen aromatischer Polyester nur sehr wenig flüchtig sind.

Durch eine Veresterung der Carboxyl-Endgruppen aromatischer Polyester mit der Gruppe der erfindungsgemässen Molekulargewichtsregler, die eine Hydroxyl- oder eine acylierte Hydroxylgruppe enthalten, wird der Polyester vor Decarboxylierungsreaktionen bei der Verarbeitung geschützt. Solche Reaktionen treten bevorzugt bei aromatischen Polyestern aus Hydroxycarbonsäuren auf, insbesondere, wenn sie zur Verarbeitung aus der Schmelze auf Temperaturen von 300°C oder höher erhitzt werden müssen. Die Kohlendioxid-Abspaltung führt dann zu blasenhaltigen Produkten.
Ausserdem können freie Carboxylgruppen andere unerwünschte Reaktionen beschleunigen, z.B. hydrolytische Abbaureaktionen im Polyester.

Überraschenderweise wurde gefunden, dass

trotz einer Endgruppenblockierung der aromatischen Polyester mit den erfindungsgemässen Molekulargewichtsreglern eine weitere Molekulargewichtserhöhung durch eine nachträgliche Feststoffkondensation möglich ist. Diese kann als Langzeit-Temperung des festen Polymers oder des daraus hergestellten Formkörpers vorzugsweise etwas unterhalb des Schmelzpunktes erfolgen, so dass keine Verklebungen zwischen den Polymerteilchen bzw. Feststoffoberflächen auftreten. Auch wenn die Schmelzviskosität des gebildeten Polyesters mit dem erfindungsgemässen Molekulargewichtsregler innerhalb der üblichen Aufarbeitungs- und Verarbeitungszeiten praktisch konstant ist, so erfolgt doch bei einer Langzeiterhitzung sowohl in der Schmelze als auch im festen Zustand nicht zu weit unterhalb des Schmelzpunktes ein Molekulargewichtsaufbau.

Bevorzugt wird diese Langzeiterhitzung am Formkörper – beispielsweise sind dies Fäden, Filme oder Press- und Spritzgussmassen – vorgenommen, um den Vorteil der niedrigen Schmelzviskosität bei der Verarbeitung zu erhalten. Diese Temperung wird in bekannter Weise durchgeführt, zweckmässig im Vakuum und/oder einem schwachen Inertgas- oder Luftstrom über zumindest mehrere Stunden bis zu mehreren Tagen in Abhängigkeit vom angestrebten Molekulargewicht, dem Ausgangsmolekulargewicht und der gewählten Temperatur.

Die erfindungsgemässen Polyester können noch die üblichen Zusatzstoffe wie Antioxydantien, Stabilisatoren, Nukleierungsmittel, Antistatika, Flammschutzmittel, Gleit- und Schmiermittel, Weichmacher, Pigmente, Farbstoffe, optische Aufheller, Entformungshilfsmittel sowie übliche Füllstoffe wie Glasfasern und dergleichen in Mengen bis zu 60 Gew.-%, vorzugsweise 1 bis 40 Gew.-%, bezogen auf den Polyester, enthalten.

Die vollaromatischen Polyester gemäss der Erfindung können leicht aus der Schmelze zu den verschiedensten Formkörpern, beispielsweise gepressten oder gespritzten dreidimensionalen Formteilen, Fasern, Fäden, Folien und Bändern, verarbeitet werden. Sie eignen sich zum Pressen und Spritzen und können mit Hilfe von Spritzgiessverfahren, die üblicherweise zur Herstellung von Formteilen Einsatz finden, verformt werden. Fäden, Fasern oder Folien können durch Schmelzspinnen bzw. Schmelzextrudieren hergestellt werden.

Die erhaltenen Formteile können gegebenenfalls einer Wärmebehandlung unterworfen werden, wodurch ihre physikalischen Eigenschaften weiter verbessert werden. Insbesondere wird bei Fasern und Folien die Reissfestigkeit bzw. Zugfestigkeit durch diese Wärmebehandlung gesteigert.

Beispiel 1:

a) In einem 2-l Rundkolben, ausgerüstet mit einem Metallrührer, einer Gaseinleitungsöffnung und einer Destillationsbrücke, wurden 630,0 g 4-Acetoxybenzoesäure (70 Mol-%), 345,0 g 6-Acetoxy-2-naphthoesäure (30 Mol-%) und 21,1 g N-[4-Acetoxyphenyl]-phthalimid (1,5 Mol-% Zusatz) unter einem Stickstoff-Gasstrom bei 250°C aufgeschmolzen. Bei dieser Temperatur setzte dann die Polykondensationsreaktion ein unter Destillation der freiwerdenden Essigsäure. Nach 20-minütiger Destillation wurde die Temperatur auf 260°C erhöht, nach weiteren 20 Minuten auf 280°C, nach weiteren 20 Minuten auf 300°C und nach weiteren 20 Minuten auf 320°C. Nach insgesamt 1 h 40 min waren 275 ml Essigsäure destilliert (von theor. 290 ml) und die Reaktionsschmelze war trüb und leicht viskos geworden. Dann wurde bei 320°C der Druck im Reaktionssystem in 40 Minuten auf unter 1 mbar erniedrigt, wobei gleichzeitig bei konstant belassener Stromspannung am Rührermotor die Rührgeschwindigkeit abnahm. 40 Minuten nach Anlegen des Vakuums war die Rührgeschwindigkeit von 150 auf 37 $min^{-1}$ gesunken. Nach weiteren 50 Minuten betrug die Rührgeschwindigkeit ca. 15 $min^{-1}$ bei ca. 0,1 mbar. Im Laufe weiterer 30 Minuten änderte sich die Rührgeschwindigkeit nicht mehr, d.h. die Schmelzviskosität des Polyesters blieb praktisch konstant.

Der erhaltene vollaromatische flüssig-kristalline Polyester hatte eine inhärente Viskosität (I.V.) von 4,7 dl/g, bestimmt in einer Pentafluorphenollösung mit einer Konzentration von 0,1 g/dl bei 60°C, berechnet nach folgender Formel:

$$I.V. = \frac{1n\, \eta rel,}{c}$$

worin c die Konzentration der Lösung und ηrel die relative Viskosität bedeutet. Diese wird in einem Ubbelohde-Viskosimeter durch Messung der Durchflusszeiten von Lösung und reinem Lösungsmittel ermittelt. In der Differentialabtastkalorimetrie (DSC) zeigte das Polymer eine Schmelzendotherme bei 272°C. Die Polymerschmelze zeigte in einem Heiztischmikroskop Doppelbrechung, war also optisch anisotrop.

Zwecks rheologischer Untersuchungen in einem Kapillarrheometer wurden Vorpresslinge hergestellt, indem das gemahlene Polymer bei 175°C und 600 bar zu Sinterkörpern in Kerzenform verformt wurde, die frei von Hohlräumen waren. Diese Sinterkörper wurden in einem üblichen Kapillarrheometer bei verschiedenen Temperaturen zu 2 mm dicken Strängen extrudiert. Bei 280°C beispielsweise war die Schmelzviskosität über mindestens 5 Minuten konstant und in den extrudierten Strängen waren keine Gasblasen erkennbar.

b) Das gemahlene und getrocknete Polymer wurde einer Feststoffkondensation unterworfen, indem es in einem sich drehenden Kolben in einem Heizbad und im Vakuum mit einem schwach strömenden Stickstoffstrom auf folgende Temperaturen erhitzt wurde: 2 Stunden auf 190°C, 2 Stunden auf 220°C und 48 Stunden auf 250°C. Die inhärtende Viskosität des Polyesters

war dann angestiegen auf I.V. = 5,8 dl/g und der DSC-Schmelzpunkt auf 292 °C.

Vergleichsbeispiel 1

Wie im Beispiel 1 wurde ein Polyester aus 630,0 g 4-Acetoxybenzoesäure und 345,0 g 6-Acetoxy-2-naphthoesäure jedoch ohne Zusatz des Molekulargewichtsreglers hergestellt. Nach 1 h 40 min waren 276 ml Essigsäure abdestilliert. Dann wurde der Druck wie in Beispiel 1 erniedrigt, wobei die Rührgeschwindigkeit durch die rasch zunehmende Viskosität der Schmelze innerhalb von 30 Minuten von 140 $min^{-1}$ auf ca. 8 $min^{-1}$ absank, so dass die Polykondensationsreaktion durch Belüftung mit Stickstoff rasch abgebrochen werden musste, um eine noch fliessfähige Schmelze zu erhalten.

Der erhaltene, nicht endgruppenblockierte Polyester hatte eine inhärente Viskosität I.V. = 6,7 dl/g und zeigte eine DSC-Schmelzendotherme bei 270 °C.

Wie im Beispiel 1 wurden aus dem zerkleinerten Polymer Vorpresslinge hergestellt und im Kapillarrheometer extrudiert. Bei 280 °C nahm die Schmelzviskosität des Polyesters innerhalb von 5 Minuten um ca. 50% zu. Bei Beginn der Extrusion waren die extrudierten Stränge nach visueller Beurteilung von gebrochenen Stücken frei von Blasen. Mit zunehmender Verweilzeit des Polymeren im Rheometer traten jedoch Hohlräume auf, deren Anzahl sich mit der Extrusionsdauer vermehrte.

Beispiel 2:

Der Polyester von Beispiel 1 wurde hergestellt mit dem Unterschied, dass der Molekulargewichtsregler in geringerer Menge und später zugegeben wurde. 14,05 g N-[4-Acetoxyphenyl]-phthalimid (1,0 Mol-% Zusatz) wurden 1 h 40 min zugegeben und noch weitere 20 Minuten bei Normaldruck und 320 °C gerührt, wonach insgesamt 278 ml Essigsäure abdestilliert waren. Dann wurde innerhalb von 40 Minuten der Druck auf unter 1 mbar erniedrigt, wobei gleichzeitig die Rührgeschwindigkeit von 128 $min^{-1}$ ziemlich gleichmässig auf 11 $min^{-1}$ sank. In weiteren 10 Minuten ging die Rührgeschwindigkeit nur noch langsam auf 7 $min^{-1}$ zurück, worauf die Polykondensation beendet wurde.

Der erhaltene Polyester hatte eine I.V. = 4,05 dl/g und eine Schmelzendotherme bei 271 °C.

Das gemahlene und getrocknete Polymer wurde wie im Beispiel 1 einer Feststoffkondensation unterworfen. Nach 2 h bei 190 °C und 2 h bei 220 °C wurde für 40 h auf 250 °C erhitzt. Der Polyester hatte dann eine I.V. von 5,4 dl/g und zeigte eine scharfe Schmelzendotherme bei 293 °C. Eine Fortsetzung der Feststoffkondensation durch Erhitzen für 24 h auf 270 °C erhöhte die I.V. auf 8,7 dl/g, und der Polyester zeigte eine scharfe Schmelzendotherme bei 312 °C.

Beispiel 3:

Wie in Beispiel 1 wurden 756 g 4-Acetoxybenzoesäure (70 Mol-%), 414 g 6-Acetoxy-2-naphthoesäure (30 Mol-%) und 20,8 g N-[4-Carboxyphenyl]-phthalimid (1,3 Mol-% Zusatz) polykondensiert. Nach 1 h 40 min und Erhöhung der Reaktionstemperatur von 250 °C auf 320 °C waren 338 ml Essigsäure abdestilliert. Dann wurde Vakuum angelegt wie in Beispiel 1, wobei die Rührerdrehzahl bei konstanter Regelspannung innerhalb von 40 min von 150 auf 25 $min^{-1}$ absank, in weiteren 25 Minuten auf 9 $min^{-1}$ und dann für 30 Minuten konstant blieb. Der erhaltene Polyester hatte eine I.V. von 5,0 dl/g und eine Schmelzendotherme bei 268 °C.

Beispiel 4:

Wie in Beispiel 1 wurden 252,0 g 4-Acetoxybenzoesäure (35 Mol-%), 230,0 g 6-Acetoxy-2-naphthoesäure (25 Mol-%), 132,8 g Terephthalsäure (20 Mol-%), 155,2 g Hydrochinondiacetat (20 Mol-%) und 16,9 g N-[4-Acetoxyphenyl]-phthalimid (1,5 Mol-% Zusatz) polykondensiert und nach 1 h 40 min bei 320 °C Vakuum angelegt und im Verlaufe von 40 Minuten auf unter 1 mbar gesenkt. Die Schmelzviskosität stieg nur langsam an. Nach 4 h 40 min war die Rührerdrehzahl von 150 auf 25 $min^{-1}$ gesunken und blieb während der nächsten 30 Minuten konstant.

Der erhaltene flüssig-kristalline Polyester hatte eine I.V. von 4,3 dl/g.

Vergleichsbeispiel 2

Das Beispiel 4 wurde wiederholt, jedoch ohne den Zusatz des Phthalimid-Derivates. Während der Vakuumphase des Polykondensationsprozesses sank die Rührerdrehzahl innerhalb von 2 h 45 min von 150 auf 7 $min^{-1}$ mit weiter fallender Tendenz, so dass die Polykondensationsreaktion abgebrochen werden musste. Der erhaltene flüssig-kristalline Polyester hatte eine I.V. von 5,7 dl/g.

Beispiel 5:

Wie in Beispiel 1 wurden 239,8 g 4-Acetoxybenzoesäure (33,3 Mol-%), 221,1 g Terephthalsäure (33,3 Mol-%), 258,4 g Resorcindiacetat (33,3 Mol-%) und 16,9 g N-[4-Acetoxyphenyl]-phthalimid (1,5 Mol-% Zusatz) polykondensiert und nach 1 h 40 min bei 320 °C Vakuum angelegt und im Verlauf von 40 Minuten auf unter 1 mbar gesenkt. 4 Stunden nach Beginn der Vakuumphase war die Rührerdrehzahl von 150 auf 6–7 $min^{-1}$ gesunken, wobei das Absinken in den letzten 1 bis 2 Stunden sehr langsam erfolgte.

Der erhaltene amorphe Polyester hatte eine I.V. von 0,82 dl/g, gemessen wie in Beispiel 1 beschrieben, und zeigte in der DSC eine Glasumwandlungstemperatur bei 142 °C.

Vergleichsbeispiel 3

Das Beispiel 5 wurde wiederholt ohne den Zusatz des Phthalimid-Derivates. Schon 40 Minuten nach Beginn des Vakuumprogrammes bei 320 °C war die Rührerdrehzahl von 150 auf ca. 5 $min^{-1}$ abgefallen, so dass die Polykondensationsreaktion rasch unterbrochen werden musste. Der amorphe Polyester hatte eine I.V. von 1,58 dl/g.

Beispiel 6:

In einem 1-l-Rundkolben wurden wie im Beispiel 1 378 g 4-Acetoxybenzoesäure (30 Mol-%), 207 g 6-Acetoxy-2-naphthoesäure (30 Mol-%) und 14,9 g N-[4-Acetoxyphenyl]-1,8-naphthalimid (1,5 Mol-%) polykondensiert. Nach 1 h 30 min und sukzessiver Temperaturerhöhung von 250 auf 320°C waren 167 ml Essigsäure abdestilliert. Dann wurde Vakuum angelegt und der Druck innerhalb von 40 Minuten auf unter 1 mbar erniedrigt. Nach 1 h 40 min des Vakuumprogrammes war die Rührerdrehzahl von 150 auf 33 $min^{-1}$ abgefallen und blieb während der nächsten 30 Minuten konstant. Der erhaltene flüssig-kristalline Polyester hatte eine I.V. von 5,5 dl/g und eine Schmelzendotherme bei 269°C.

**Patentansprüche**

1. Vollaromatische Polyester, bestehend im wesentlichen aus den Einheiten

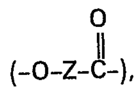, und/oder 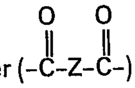 und (-O-Z-O-),

worin Z ein aromatisches Ringsystem bedeutet, wobei mindestens ein Ende der Molekülketten aus Resten eines Molekulargewichtsreglers gebildet wird, dadurch gekennzeichnet, dass die Reste des Molekulargewichtsreglers folgende Struktur aufweisen:

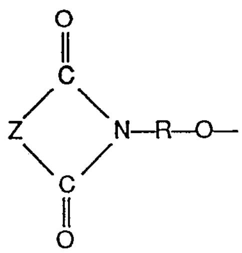, 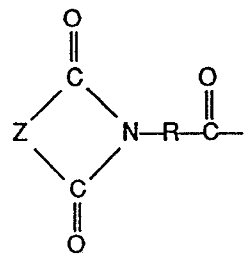,

(I)

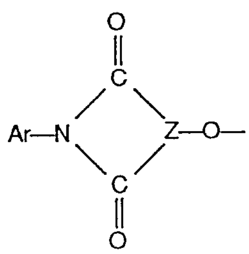, 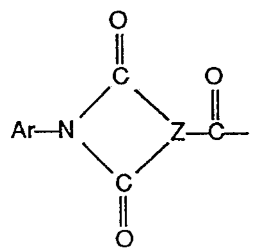,

worin die obige Bedeutung hat, R jeweils eine divalente, aromatische, aliphatische oder cycloaliphatische Gruppe bedeutet, Ar für eine aromatische Gruppe steht und der Imidring fünf- oder sechsgliedrig ist.

2. Vollaromatischer Polyester nach Anspruch 1, dadurch gekennzeichnet, dass Z, R und Ar aus unsubstituierten oder substituierten Benzol- oder Naphthalin-Ringen bestehen.

3. Vollaromatischer Polyester nach Anspruch 1 oder 2, dadurch gekennzeichnet, dass R ein unsubstituierter oder mit $C_{1-4}$-Alkyl, $C_{1-4}$-Alkoxy oder Halogen, vorzugsweise Chlor substituierter divalenter Benzol- oder Naphthalin-Ring; divalenter aliphatischer Rest mit 1 bis 6 C-Atomen; divalenter cycloaliphatischer Rest mit 6 bis 16 C-Atomen, vorzugsweise 6 bis 10 C-Atomen ist.

4. Vollaromatischer Polyester nach einem oder mehreren der Ansprüche 1 bis 3, dadurch gekennzeichnet, dass die Endgruppen bis zu 2 Mol-% der den Polyester bildenden aromatischen Einheiten ausmachen.

5. Vollaromatischer Polyester nach einem oder mehreren der Ansprüche 1 bis 4, dadurch gekennzeichnet, dass er eine optisch-anisotrope Schmelze bildet.

6. Verfahren zur Herstellung der vollaromatischen Polyester nach den Ansprüchen 1 bis 5 durch Schmelzkondensation von geeigneten Kondensationspartnern in Gegenwart eines Molekulargewichtsreglers, dadurch gekennzeichnet, dass als Molekulargewichtsregler eine Verbindung folgender Struktur oder entsprechende Gemische eingesetzt werden:

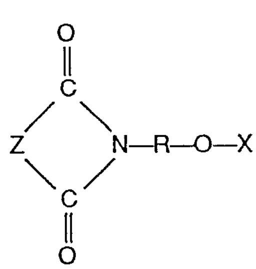, 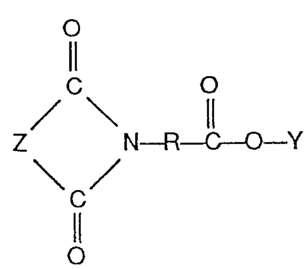,

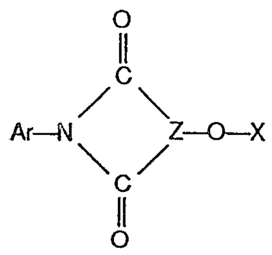, 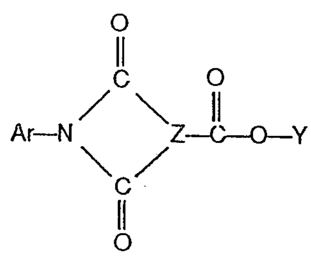,

(II)

worin Z, R und Ar die obige Bedeutung haben, der Imidring fünf- oder sechsgliedrig ist, X Wasserstoff oder ein Acylrest mit 2 bis 6 C-Atomen und Y Wasserstoff oder ein unter den Bedingungen der Polykondensation leicht abspaltender Kohlenwasserstoffrest ist.

7. Verfahren nach Anspruch 6, dadurch gekennzeichnet, dass der Molekulargewichtsregler in Mengen bis zu 2 Mol-%, bezogen auf die Gesamtmenge an bifunktionellen Kondensationspartnern verwendet wird.

8. Verfahren nach Anspruch 6 oder 7, dadurch gekennzeichnet, dass nach der Schmelzkondensation noch eine Feststoffkondensation erfolgt.

9. Formkörper, hergestellt aus den vollaromatischen Polyestern nach Anspruch 1 bis 5.

10. Formkörper nach Anspruch 9, dadurch gekennzeichnet, dass er bis zu 60 Gew.-% eines Zusatzstoffes enthält.

**Claims**

1. A completely aromatic polyester composed essentially of the units

$(-O-Z-\overset{\overset{O}{||}}{C}-)$, and/or $(-\overset{\overset{O}{||}}{C}-Z-\overset{\overset{O}{||}}{C}-)$ and $(-O-Z-O-)$

in which Z denotes an aromatic ring system, at least one end of the molecular chains being formed from radicals of a molecular weight regulator, wherein the radicals of the molecular weight regulator have the following structure:

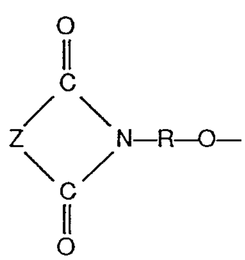, 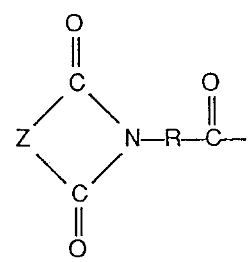,

(I)

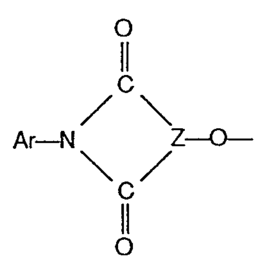, 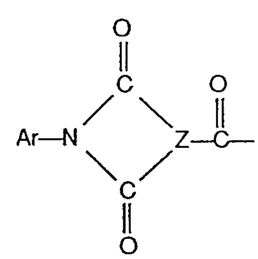,

in which Z has the above meaning, R denotes in each case a divalent, aromatic, aliphatic or cycloaliphatic group, Ar represents an aromatic group and the imide ring has five or six members.

2. A completely aromatic polyester as claimed in claim 1, wherein Z, R and Ar comprise unsubstituted or substituted benzene or naphthalene rings.

3. A completely aromatic polyester as claimed in claim 1 or 2, wherein R is a divalent benzene or naphthalene ring which is unsubstituted or substituted by $C_{1-4}$-alkyl, $C_{1-4}$-alkoxy or halogen, preferably chlorine; a divalent aliphatic radical having 1 to 6 carbon atoms, or is a divalent cycloaliphatic radical having 6 to 16 carbon atoms, preferably 6 to 10 carbon atoms.

4. A completely aromatic polyester as claimed in one or more of claims 1 to 3, wherein the end groups amount to up to 2 mole% of the aromatic units forming the polyester.

5. A completely aromatic polyester as claimed in one or more of claims 1 to 4, which forms an optically anisotropic melt.

6. A process for the preparation of the completely aromatic polyesters as claimed in any of claims 1 to 5 by the melt condensation of suitable

condensation reactants in the presence of a molecular weight regulator, wherein a compound of the following structure or corresponding mixtures are employed as the molecular weight regulator:

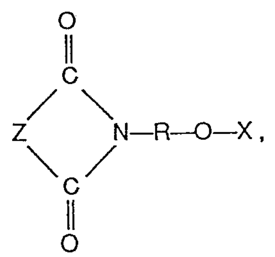

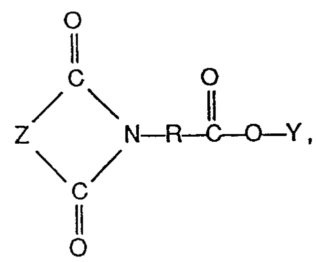

(II)

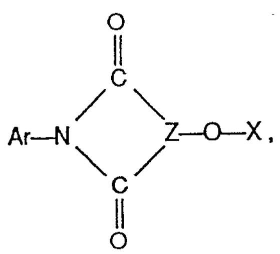

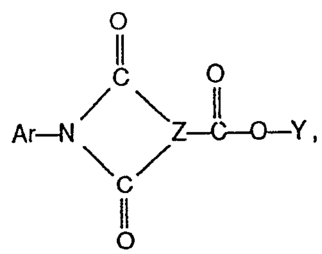

in which Z, R and Ar have the above meaning, the imide ring has five or six members, X is hydrogen or an acyl radical having 2 to 6 carbon atoms and Y is hydrogen or a hydrocarbon radical which is readily eliminated under the conditions of the polycondensation reaction.

7. The process as claimed in claim 6, wherein the molecular weight regulator is used in amounts of up to 2 mole%, based on the total amount of bifunctional condensation reactants.

8. The process as claimed in claim 6 or 7, wherein a solid-phase condensation is additionally carried out after the melt condensation.

9. A shaped article produced from the completely aromatic polyesters as claimed in any of claims 1 to 5.

10. A shaped article as claimed in claim 9, which contains up to 60% by weight of an additive.

**Revendications**

1. Polyesters totalement aromatiques, constitués essentiellement des unités

$(\text{-O-Z-}\overset{\overset{O}{\|}}{C}\text{-})$, et/ou $(\text{-}\overset{\overset{O}{\|}}{C}\text{-Z-}\overset{\overset{O}{\|}}{C}\text{-})$ et $(\text{-O-Z-O})$,

où Z désigne un système cyclique aromatique, au moins une extrémité des chaînes moléculaires étant formée de résidus d'un régulateur de masse moléculaire, caractérisés en ce que les résidus du régulateur de masse moléculaire ont la structure suivante:

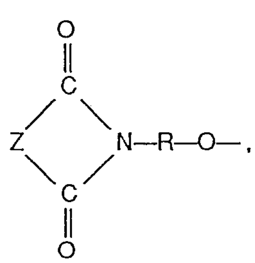

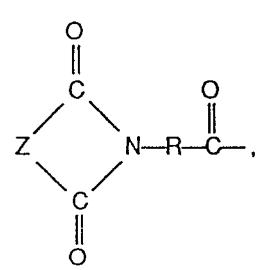

(I)

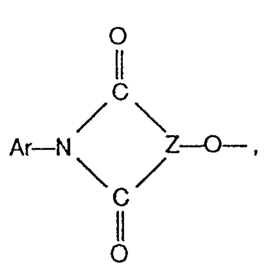

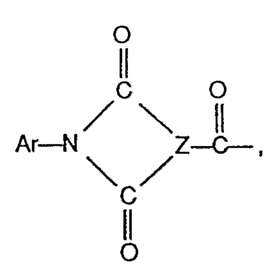

où Z a la signification ci-dessus, chaque radical R représente un groupe aromatique, aliphatique ou cycloaliphatique bivalent, Ar est un groupe aromatique et le noyau imide est à cinq ou six chaînons.

2. Polyester totalement aromatique selon la revendication 1, caractérisé en ce que Z, R et Ar sont constitués de noyaux benzéniques ou naphtaléniques substitués ou nonsubstitués.

3. Polyester aromatique selon la revendication 1 ou 2, caractérisé en ce que R est un noyau benzénique ou naphtalénique bivalent, non-substitué ou substitué par un radical alkyle en $C_{1-4}$, alcoxy en $C_{1-4}$ ou halogéno, de préférence chloro; un radical aliphatique bivalent ayant de 1 à 6 atomes de carbone; un radical cycloaliphatique bivalent ayant de 6 à 16 atomes de carbone, de préférence 6 à 10 atomes de carbone.

4. Polyester totalement aromatique selon l'une ou plusieurs des revendications 1 à 3, caractérisé en ce que les groupes terminaux comptent pour jusqu'à 2% en moles des unités aromatiques formant le polyester.

5. Polyester totalement aromatique selon l'une ou plusieurs des revendications 1 à 4, caractérisé en ce qu'il forme une masse fondue optiquement anisotrope.

6. Procédé pour la préparation des polyesters totalement aromatiques selon les revendications 1 à 5, par condensation à l'état fondu de substances appropriées participant à une condensation, en présence d'un régulateur de masse moléculaire, caractérisé en ce qu'on utilise comme régulateur de masse moléculaire un composé ayant la structure suivante, ou les mélanges correspondants:

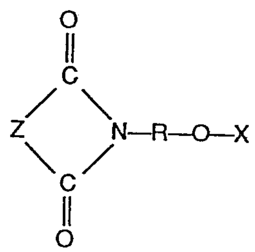
,
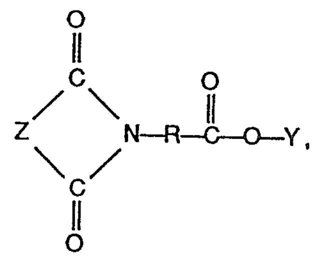
,

(II)

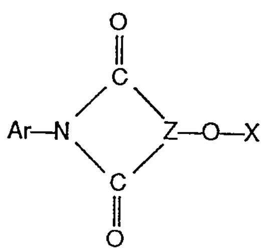
,
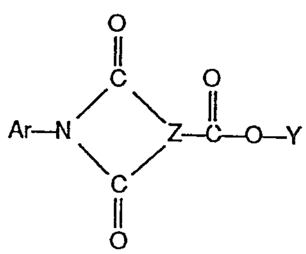
,

où Z, R et Ar ont les significations ci-dessus, le noyau imide est à cinq ou six chaînons, X est un hydrogène ou un radical acyle ayant de 2 à 6 atomes de carbone, et Y est un hydrogène ou un radical hydrocarboné s'éliminant facilement dans les conditions de la polycondensation.

7. Procédé selon la revendication 6, caractérisé en ce que le régulateur de masse moléculaire est utilisé en des quantités allant jusqu'à 2% en moles, par rapport à la quantité totale des substances bifonctionnelles participant à la condensation.

8. Procédé selon la revendication 6 ou 7, caractérisé en ce que la condensation à l'état fondu est encore suivie d'une condensation à l'état solide.

9. Objet moulé obtenu à partir des polyesters totalement aromatiques selon les revendications 1 à 5.

10. Article moulé selon la revendication 9, caractérisé en ce qu'il contient jusqu'à 60% en poids d'un additif.